# EUROPEAN PATENT SPECIFICATION

(11) **EP 2 184 247 B1**
(45) Date of publication and mention of the grant of the patent: **21.09.2011**
(21) Application number: 09175067.9
(22) Date of filing: 04.11.2009
(51) Int. Cl.: B66B 7/12, G01N 27/82

(54) **Inspection tool for wire rope**
Prüfwerkzeug für Drahtseile
Outil d'inspection pour câble métallique

(30) Priority: 05.11.2008 JP 2008283832
(43) Date of publication of application: 12.05.2010
(73) Proprietor: Hitachi Ltd., Tokyo 100-8280 (JP); Hitachi Building Systems Co., Ltd., Tokyo 101-8941 (JP)
(72) Inventor: Hayakawa, Tomohisa, Tokyo 100-8220 (JP); Noguchi, Naoaki, Tokyo 100-8220 (JP); Hayano, Tomio, Tokyo 100-8220 (JP); Asai, Daisuke, Tokyo 100-8220 (JP); Ohnishi, Tomoharu, Tokyo (JP); Sekiya, Takashi, Tokyo (JP)
(74) Representative: MERH-IP Matias Erny Reichl Hoffmann

(56) References cited:
- JP-A- 9 184 824
- JP-A- 2008 024 454

## Description

### BACKGROUND OF THE INVENTION

This invention relates to an elevator rope inspection tool for detecting damage of an elevator wire rope. More particularly, the invention relates to an inspection tool for an elevator wire rope that efficiently measures damage occurring inside the rope.

A damage mode of the rope used for the elevator includes a mode in which strands on the rope surface are broken and a mode in which the strands inside the rope are broken. A groove shape of a sheave exerts great influences on the breakage position of the strands. In a sheave having a V shaped groove, variance occurs between the groove surface and the rope and breaking of the strands occurs on a contact surface with the groove. In the case of a sheave having a round groove shape, on the other hand, damage may proceed inside the rope. Therefore, it is particularly important to precisely measure the damage occurring inside the rope. To investigate the internal damage of the rope, it is customary at present to employ a leakage flux method which magnetizes a part of the rope and detects a magnetic flux leaking from the breaking position of the strand.

In an inspection tool for an elevator wire rope using the leakage flux method, it is known to dispose guide projections for smoothly guiding a wire rope in the proximity of both ends of both side surfaces of a probe to reduce vibration resulting from the contact of the rope with a magnetizer and with magnetic detection unit and to suppress noise of the vibration against detection signals. JP-A-9-184824 is one of the references describing such a guide projection.

### SUMMARY OF THE INVENTION

The prior art technology described above is directed to prevent vibration resulting from the wire rope and to reduce the noise of the detection signals but cannot measure highly precisely the damage inside the rope.

In other words, because between-ends distance or the distance between ends that occurs with breaking of the strand is small, the leakage flux is small and the output voltage of the detector is small. Therefore, it is difficult to judge the internal damage of the rope and the existence of breaking of the strand by merely guiding the wire rope.

It is an object of the invention to solve the problems described above and to judge highly precisely the internal damage of the rope. It is another object of the invention to reduce the size of an inspection tool for an elevator wire rope and to make it possible to execute high precision measurement even when a cage of an elevator is suspended by a plurality of ropes and gaps among adjacent ropes are narrow.

In an inspection tool for an elevator wire rope for detecting a leakage flux by magnetizing a part of a rope used for an elevator and measuring damage of the rope, an embodiment of the invention forms a curvature portion by pushing and curving the rope in a longitudinal direction and detects a leakage flux by magnetizing the curvature portion.

According to the invention, the rope is curved and the breaking distance of the strand at the rope damage portion is increased. Therefore, the leakage flux becomes great and the sensor output increases with the result that the internal damage of the rope can be judged highly precisely. Though capable of high precision measurement, the inspection tool for an elevator wire rope according to the invention is compact in size.

### BREIF DESCRIPTION OF THE DRAWINGS

Fig. 1 is a side view showing an overall appearance of an elevator according to one embodiment of the invention;
Fig. 2 is a sectional side view showing a rope inspection tool according to one embodiment of the invention;
Fig. 3 is a perspective view showing the rope inspection tool according to one embodiment of the invention; and
Fig. 4 is a sectional side view showing a rope inspection tool according to one embodiment of the invention.

### DESCRIPTION OF THE EMBODIMENTS

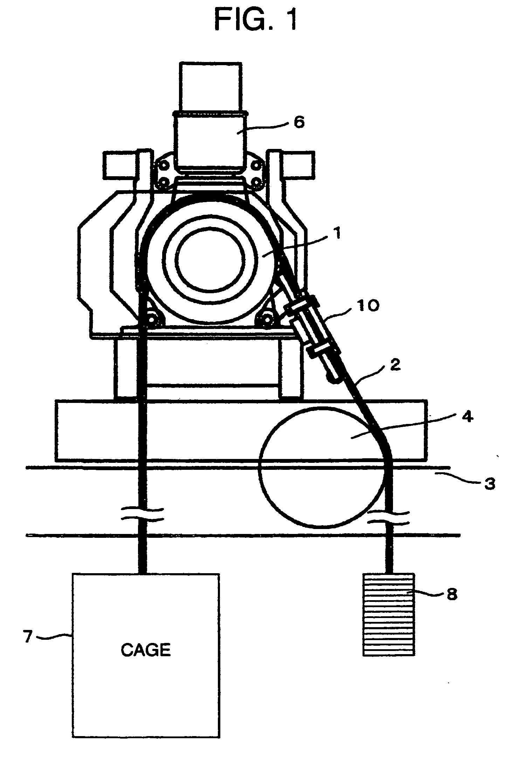

An elevator includes a cage 7, a rope 2, hoisting machine 6 having a sheave 1 for hoisting the rope 2 and a counterweight 8 as shown in Fig. 1. A rope tester includes a magnetizer for magnetizing the rope 2, a flux sensor for detecting a leakage flux resulting from damage of the rope 2 and a slide plate for keeping constant the distance between the rope 2 and the flux sensor. During strand breakage inspection of the rope 2, the slide plate and the rope 2 come into contact with each other and a measurement surface measures a surface opposite to the contact surface of the sheave 1 and the rope 2.

To magnetize a part of the rope 2, two permanent magnets having different magnetic poles are arranged in a longitudinal direction of the rope 2. A flux sensor such as a coil is interposed between these two permanent magnets. While the rope 2 is allowed to travel at a low speed by the hoisting machine, the flux sensor detects a voltage V = dΦ/dt (V: voltage [V], Φ: flux [Wb], t: time) corresponding to a change ratio of the leakage flux. Signal processing such as a filter processing is executed for the detection signals by a processor and the existence of damage is judged by comparing a certain predetermined threshold value with the signal output of the sensor.

The leakage flux at the strand breakage portion is substantially proportional to between-ends distance or the distance between ends of the rope when the strand is broken. Because the between-ends distance occurring upon breakage of the strand is short, the leakage flux of internal damage of the wire rope is small and the output voltage of the sensor is small, too. Therefore, the existence of the rope breakage cannot be judged easily by merely guiding the wire rope.

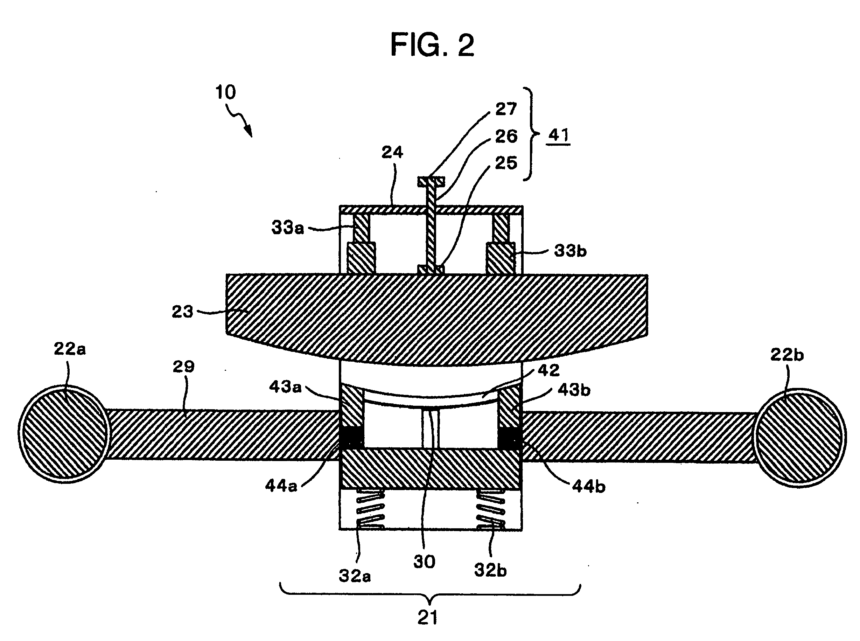

An embodiment of the invention will be hereinafter explained with reference to Fig. 2, Fig. 3 and Fig. 4. The drawing is a sectional view of a side surface of an inspection tool.

An inspection worker fits the inspection tool 10 between the sheave 1 and a deflector sheave 4 in an elevator machine room situated at an upper part of the elevator path and inspects breakage of the strand of the rope. The inspection tool 10 includes a rope tester 21, a guide shoe 23 having a certain radius of curvature, a push mechanism 41 and a guide roller 22a, 22b and mitigates an impact.

As the push mechanism 41 pushes the guide shoe 23 in a substantial vertical direction of the rope 2, the rope is forcibly curved. Therefore, the between-ends distance can be increased when the strand is broken. Because the leakage flux of the damage portion is substantially proportional to the damage volume (degree of damage), the damage volume can be increased by increasing the between-ends distance when the strand is broken and the leakage flux from inside the rope can becomes greater. In consequence, the detection signal of the flux sensor 30 increases and detection of the damage inside the rope becomes easier.

The construction of the rope tester 21 will be explained in further detail. The rope tester 21 is a magnetizer for magnetizing the rope 2, including a flux sensor 30 and a slide plate 42 so disposed as to oppose the guide shoe 23. The slide plate 42 has a U-shaped groove having a radius of curvature substantially equal to that of the guide shoe 23 in the longitudinal direction. The rope 2 slides and travels between the guide shoe 23 and the slide plate 42. The rope tester 21 uses permanent magnets 44a and 44b as magnetization unit and permanent magnets 44a and 44b having different poles are arranged in the longitudinal direction of the rope 2.

To insure sufficient magnetization of the rope 2 for measuring the leakage flux at the curvature portion, ferromagnetic bodies 43a and 43b are provided to the upper surface of the permanent magnet 44a and 44b and the shape of these ferromagnetic bodies 43a and 43b is in conformity with that of the slide plate 42. The flux sensor 30 is arranged at a substantial intermediate point of both permanent magnets 44a and 44b and detects the leakage flux at the lower part of the curvature portion of the rope 2. It is sufficient if the permanent magnets 44a and 44b used as the magnetization unit have magnetization force to a degree such that the leakage flux occurs from the damage of the rope 2. Alternatively, electromagnets, for example, may be used as the magnetization unit to magnetize the rope 2.

When disconnection develops on the surface of the rope during the damage inspection of the rope 2, the broken rope protrudes outward from time to time. Because the inspection of the rope 2 is carried out while the rope 2 is allowed to travel, this breakage applies a large impact to the rope tester 21. In the inspection tool according to the invention, therefore, two springs 32 are arranged at the lower part of the rope tester 21 in the longitudinal direction of the rope 2 as shown in Fig. 2 so as to absorb the impact force as the rope tester 21 vibrates owing to jump-out of the strand resulting from the damage of the surface of the rope 2.

As the rope 2 is bent more and more, the between-ends distance at the time of disconnection of the strand becomes greater and detection of the leakage flux becomes easier. However, excessive bending may damage the rope 2. For this reason, the radius of curvature of the guide shoe 23 is set to a value smaller than that of the sheave 1 lest the curvature formed by the guide shoe 23 damages the rope 2 (the radius of curvature is increased).

The contact surface between the rope 2 and the guide shoe 23 has a U shaped groove. While pushing the rope 23, the guide shoe 23 guides the rope 2 without allowing it to fall off.

Referring to Fig. 2, a shoe structure is employed as a member for forming the curvature portion but the guide may be the one that can curve the rope 2 to a curvature similar to that of the shoe structure. For example, the guide may well be a curvature guide roller having a plurality of rollers. This guide portion can insure smooth travel of the rope 2 owing to the rotation of a plurality of guide rollers even when a rope having a high coefficient of friction is used or when friction occurs as the rope 2 is pushed.

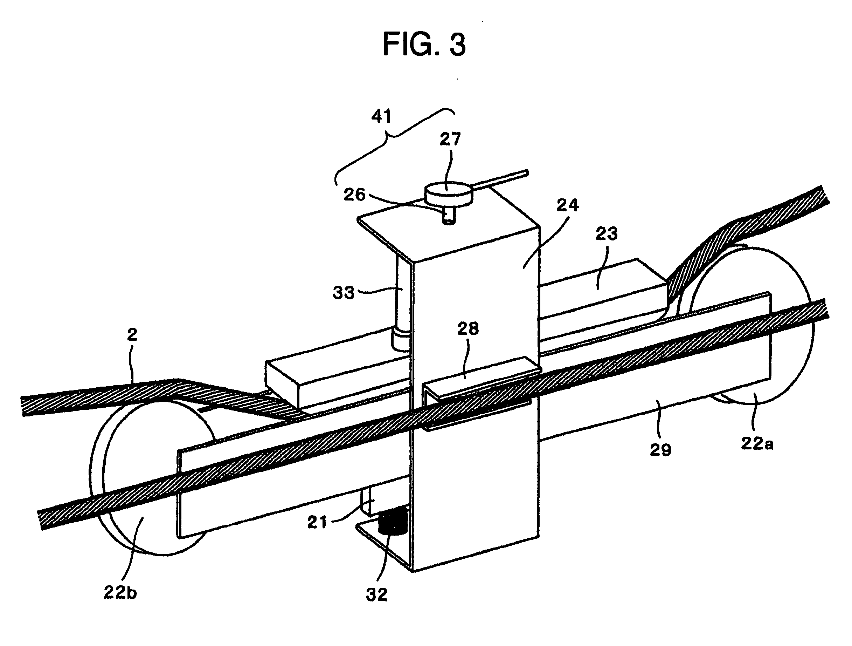

The rope curving mechanism of the inspection tool includes the support base 24, the push mechanism 41, the guide shoe 23, the guide roller 22a, 22b and the guide roller 22a, 22b support portion 29 as shown in Fig. 3. The support base 24 is fixed to the side surface of a guide roller 22a, 22b support base 29. The guide shoe 23 is interconnected by the support base 24 and a translation guide 33 so that its upper surface can be guided substantially in the vertical direction. For example, two linear bushes are arranged on the upper surface of the guide shoe 23 in the longitudinal direction of the rope 2 and are interconnected to the support base 24. The push mechanism 41 is arranged substantially at the center of the guide shoe 23 and up-down motion of the push mechanism 41 substantially feeds the upper surface of the guide shoe 23 in the vertical direction, pushes it to the rope 2 with the guide roller 22a, 22b as the supporting point and forms the curvature portion profiling the radius of curvature of the guide shoe 23.

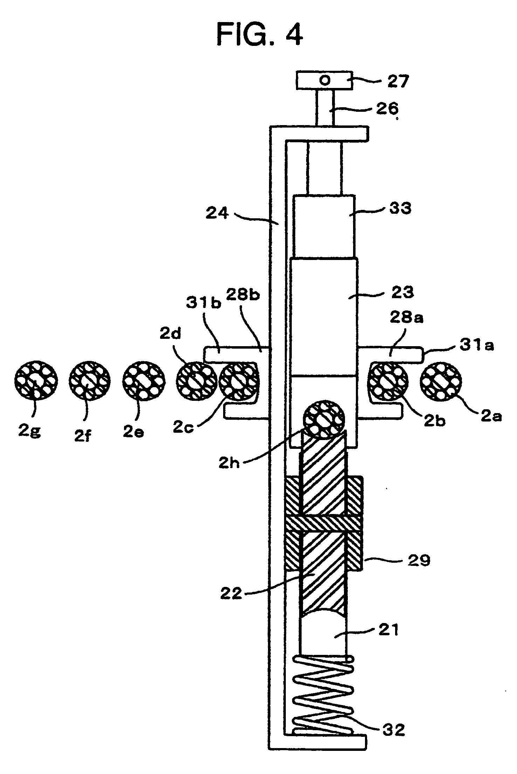

The slide guide portion 28 is formed of a material having a high sliding factor and has a shape having a bracket shaped section as shown in Fig. 4. A cage of the elevator is suspended by a plurality of wire rope and the gap between adjacent pairs of ropes is small. Since the inspection tool according to the invention measures one rope among a plurality of ropes, the adjacent ropes 2b and 2c may come into contact with the support base 24 and with the guide shoe 23 when the inspection tool is installed between the sheave 1 and the deflector sheave 4 in the machine room. Therefore, the slide guide portion 28 is provided to the side surface of the inspection tool to guide the rope 2 in the longitudinal direction.

The shape of the contact surface between the slide guide portion 28 and the rope 2 is decided in such a fashion as to have a certain curvature and to lower the surface pressure when these members come into mutual surface contact. Therefore, uncontrolled movement of adjacent ropes in the vertical direction can be suppressed during measurement. Because the weight of the inspection tool can be supported by adjacent ropes 2b and 2c at the swell portions 31a and 31b during the measurement, the inspection tool need not be supported by hand and the working factor can be improved.

## Claims

1. An inspection tool (10) for an elevator wire rope for detecting a leakage flux by magnetizing a part of a rope (2) used for an elevator and measuring damage of said rope (2), **characterized in that**:
the inspection tool (10) includes means for forming a curvature portion (23, 42) pushing and curving said rope in a longitudinal direction; and
the leakage flux is detected by magnetizing said curvature portion.

2. The inspection tool (10) for an elevator wire rope according to claim 1, wherein said curvature portion is formed by using two guide rollers (22a, 22b) arranged in the longitudinal direction of said rope and a guide shoe (23) interposed between said guide rollers.

3. The inspection tool (10) for an elevator wire rope according to claim 1 or 2, wherein said curvature portion is formed at a radius of curvature smaller than a radius of curvature of a sheave (1) for hoisting said rope (2).

4. The inspection tool (10) for an elevator rope according to claim 1, wherein said curvature portion is formed as a guide shoe (23) interposed between two guide rollers (22a, 22b) arranged in the longitudinal direction of said rope (2) which is pushed.

5. The inspection tool (10) for an elevator rope according to at least one of claims 1 - 4, further **characterized in that**:
the inspection tool (10) includes two guide rollers (22a, 22b) arranged in the longitudinal direction of said rope (2), a guide shoe (23) interposed between said guide rollers (22a, 22b) and having a radius of curvature on the side of said rope (2) and a slide plate (42) disposed in such a fashion as to oppose said guide shoe,
wherein said rope is curved as it passes by said guide rollers, said guide shoe and said slide plate.

6. The inspection tool (10) for an elevator wire rope according to at least one of claims 1 - 4, further **characterized by** including two guide rollers (22a, 22b) arranged in the longitudinal direction of said rope (2), a guide shoe (23) interposed between said guide rollers (22a, 22b) and having a radius of curvature on the side of said rope (2), a slide plate (42) disposed in such a fashion as to oppose said guide shoe and springs (32) for supporting said guide rollers said guide shoe and said slide plate.

7. The inspection tool (10) for an elevator wire rope according to at least one of claims 1 - 4, further **characterized by** including two guide rollers (22a, 22b) arranged in the longitudinal direction of said rope (2), a guide shoe (23) interposed between said guide rollers (22a, 22b) and having a radius of curvature on the side of said rope (2), a slide plate (42) disposed in such a fashion as to oppose said guide shoe and a slide guide portion (28) arranged on the side surface of said guide shoe (23).

## Patentansprüche

1. Prüfwerkzeug (10) für ein Aufzugdrahtseil zum Erfassen eines Streuflusses durch Magnetisieren eines Teils eines Seils (2), das bei einem Aufzug eingesetzt wird, und Messen der Beschädigung des Seils (2), **dadurch gekennzeichnet, dass**:
das Prüfwerkzeug (10) Mittel zum Ausbilden eines Krümmungsabschnitts (23, 42) einschließt, der das Seil in Längsrichtung schiebt und krümmt; und
der Streufluss durch Magnetisieren dieses Krümmungsabschnitts erfasst wird.

2. Prüfwerkzeug (10) für ein Aufzugdrahtseil nach Anspruch 1, wobei der Krümmungsabschnitt durch Verwendung von zwei in Längsrichtung des Seils angeordneten Führungsrollen (22a, 22b) und eines Führungsschuhs (23), der zwischen die Führungsrollen gefügt ist, gebildet wird.

3. Prüfwerkzeug (10) für ein Aufzugdrahtseil nach Anspruch 1 oder 2, wobei der Krümmungsabschnitt mit einem Krümmungsradius ausgebildet ist, der kleiner als der Krümmungsradius einer Seilscheibe (1) zum Hochziehen des Seils (2) ist.

4. Prüfwerkzeug (10) für ein Aufzugdrahtseil nach Anspruch 1, wobei der Krümmungsabschnitt als Führungsschuh (23) ausgebildet ist, der zwischen zwei Führungsrollen (22a, 22b) gefügt ist, die in der Längsrichtung des Seils (2), das gedrückt wird, angeordnet sind.

5. Prüfwerkzeug (10) für ein Aufzugdrahtseil nach mindestens einem der Ansprüche 1 bis 4, weiterhin **dadurch gekennzeichnet, dass**:
das Prüfwerkzeug (10) zwei in Längsrichtung des Seils (2) angeordnete Führungsrollen (22a, 22b) einen Führungsschuh (23), der zwischen die Führungsrollen (22a, 22b) gefügt ist und einen Krümmungsradius auf der Seite des Seils (2) aufweist, und eine Gleitplatte (42) einschließt, die so angeordnet ist, dass sie dem Führungsschuh gegenüberliegt,
wobei das Seil gekrümmt wird, wenn es an den Führungsrollen, dem Führungsschuh und der Gleitplatte vorbeiläuft.

6. Prüfwerkzeug (10) für ein Aufzugdrahtseil nach mindestens einem der Ansprüche 1 bis 4, weiterhin **gekennzeichnet durch** Beinhalten von zwei Führungsrollen (22a, 22b), die in Längsrichtung des Seils (2) angeordnet sind, einem Führungsschuh (23), der zwischen die Führungsrollen (22a, 22b) gefügt ist und einen Krümmungsradius auf der Seite des Seils (2) aufweist, einer Gleitplatte (42), die so angeordnet ist, dass sie dem Führungsschuh gegenüberliegt, und von Federn (32) zum Halten der Führungsrollen, des Führungsschuhs und der Gleitplatte.

7. Prüfwerkzeug (10) für ein Aufzugdrahtseil nach mindestens einem der Ansprüche 1 bis 4, weiterhin **gekennzeichnet durch** Beinhalten von zwei Führungsrollen (22a, 22b), die in Längsrichtung des Seils (2) angeordnet sind, einem Führungsschuh (23), der zwischen die Führungsrollen (22a, 22b) gefügt ist und einen Krümmungsradius auf der Seite des Seils (2) aufweist, einer Gleitplatte (42), die so angeordnet ist, dass sie dem Führungsschuh gegenüberliegt, und von einem Gleitführungsabschnitt (28), der auf der Seitenfläche des Führungsschuhs (23) angeordnet ist.

## Revendications

1. Outil d'inspection (10) pour un câble métallique d'ascenseur afin de détecter un flux de fuite en aimantant une partie d'un câble (2) utilisé pour un ascenseur et de mesurer les dommages dudit câble (2), **caractérisé en ce que** :
l'outil d'inspection (10) inclut des moyens pour former une partie de courbure (23, 42) poussant et courbant ledit câble dans une direction longitudinale, et
le flux de fuite est détecté en aimantant ladite partie de courbure.

2. Outil d'inspection (10) pour un câble métallique d'ascenseur selon la revendication 1, dans lequel ladite partie de courbure est formée en utilisant deux rouleaux de guidage (22a, 22b) agencés dans la direction longitudinale dudit câble et un patin de guidage (23) intercalé entre lesdits rouleaux de guidage.

3. Outil d'inspection (10) pour un câble métallique d'ascenseur selon la revendication 1 ou 2, dans lequel ladite partie de courbure est formée selon un rayon de courbure inférieur à un rayon de courbure d'une poulie (1) pour hisser ledit câble (2).

4. Outil d'inspection (10) pour un câble d'ascenseur selon la revendication 1, dans lequel ladite partie de courbure formée en tant que patin de guidage (23) intercalé entre deux rouleaux de guidage (22a, 22b) agencés dans la direction longitudinale dudit câble (2) qui est poussée.

5. Outil d'inspection (10) pour un câble d'ascenseur selon au moins l'une des revendications 1 à 4, **caractérisé en outre en ce que** :
l'outil d'inspection (10) inclut deux rouleaux de guidage (22a, 22b) agencés dans la direction longitudinale dudit câble (2), un patin de guidage (23) intercalé entre lesdits rouleaux de guidage (22a, 22b) et ayant un rayon de courbure sur le côté dudit câble (2) et une plaque-glissière (42) disposée de manière à être opposée audit patin de guidage,
ledit câble étant courbé lorsqu'il passe par lesdits rouleaux de guidage, ledit patin de guidage et ladite plaque-glissière.

6. Outil d'inspection (10) pour un câble métallique d'ascenseur selon au moins l'une des revendications 1 à 4, **caractérisé en outre en ce qu'**il inclut deux rouleaux de guidage (22a, 22b) agencés dans la direction longitudinale dudit câble (2), un patin de guidage (23) intercalé entre lesdits rouleaux de guidage (22a, 22b) et ayant un rayon de courbure sur la côté dudit câble (2), une plaque-glissière (42) disposée de manière à être opposée audit patin de guidage et des ressorts (32) pour supporter lesdits rouleaux de guidage, ledit patin de guidage et ladite plaque-glissière.

7. Outil d'inspection (10) pour un câble métallique d'ascenseur selon au moins l'une des revendications 1 à 4, **caractérisé en outre en ce qu'**il inclut deux rouleaux de guidage (22a, 22b) agencés dans la direction longitudinale dudit câble (2), un patin de guidage (23) intercalé entre lesdits rouleaux de guidage (22a, 22b) et ayant un rayon de courbure sur le côté dudit câble (2), une plaque-glissière (42) disposée de manière à être opposée audit patin de guidage et une partie de glissière (28) agencée sur la surface latérale dudit patin de guidage (23) .
